# EUROPEAN PATENT SPECIFICATION

(11) **EP 3 392 181 B1**
(45) Date of publication and mention of the grant of the patent: **24.01.2024**
(21) Application number: 18164083.0
(22) Date of filing: 26.03.2018
(51) Int. Cl.: B66B 3/00, B66B 1/46, B66B 5/00

(54) **A HOLOGRAPHIC ELEVATOR ASSISTANCE SYSTEM**
HOLOGRAPHISCHES AUFZUGASSISTENZSYSTEM
SYSTÈME D'ASSISTANCE D'ASCENSEUR HOLOGRAPHIQUE

(30) Priority: 25.03.2017 IN 201711010629
(43) Date of publication of application: 24.10.2018
(73) Proprietor: Otis Elevator Company, Farmington, Connecticut 06032 (US)
(72) Inventor: RAO, BV, 500085 Telangana (IN); BODLA, Prakash, 500085 Telangana (IN); PAHLKE, Derk, Oscar, 13507 Berlin (DE)
(74) Representative: Dehns

(56) References cited:
- WO-A1-2005/113399
- CN-U- 204 416 809
- CN-U- 205 328 387
- JP-A- S62 161 687
- US-A1- 2010 121 808
- US-B1- 9 477 317

## Description

### FIELD OF INVENTION

The present invention relates to passenger assistance devices. In particular, the present invention relates to a holographic elevator passenger assistance system.

### BACKGROUND OF THE INVENTION

Elevators are an important means of transport in buildings in general and in particular high-rise towers. Elevators consume a significant amount of time of passengers commuting between floors of a building and/or a high-rise tower. A medical or technical emergency may occur during this commuting time. Conventionally, elevators were manned by an elevator operator to help passengers in general and provide assistance to passengers during emergencies. However, the profession is on the decline and there is a need for an automated system that can assist users during normal travel and/or in emergency situations.

Additionally, in some instances, passengers can feel anxiety or suffer panic attacks because of being alone in an elevator in a normal situation or in an emergency situation. Some passengers with medical conditions, for example, heart patients may also have a risk of mortality due to suffocation, anxiety, or panic attacks. Further, for handicapped passengers such as blind passengers, deaf passengers, or passengers with upper or lower limb handicap, it is difficult to operate elevators on their own. Assistive technologies that can aid these passengers and guide them in the elevator cab can be of great help. Further, in case of medical or technical emergencies an artificial intelligence (AI) assistant system that can detect the emergency situation and provide technical and medical guidance to passengers or hand over the controls to a human operator to remediate the situation is desirable. Furthermore, it is desirable to train the AI assistant or the human operator to provide counseling to the passengers to ameliorate anxiety or panic among the passengers. Moreover, it is desirable to provide specialist technical assistance to a field technician performing a maintenance operation on the elevator.

Prior art solutions have been proposed to solve some of the problems identified above, for example, US6341668, CN105967019, CN204400366 U and US5485897 provide some form of automated emergency assistance to passengers. US9477317 discloses a touch-free input control panel, suitable for use as an elevator control panel. CN204416809 discloses a lift control device including a holographic display. CN205328387U discloses an apparatus for controlling an elevator based on facial recognition and discloses the preamble of claim 1 and 11. However, there is still a continuous need in the art to provide better general or emergency assistance to passengers in an elevator. Holographic projection and Artificial Intelligence (Al) Assistant technologies have been increasingly improving over the years and can be used to provide assistance to passengers in an elevator in various situations, such as the ones described above.

The present invention overcomes the above identified problems and discloses an AI based holographic elevator assistant to assist passengers in their commute within the elevators in both normal and emergency situations.

### OBJECTIVES OF THE INVENTION

A basic objective of the present invention is to provide a holographic assistant in an elevator.

Another object of the present invention is to provide general assistance to elevator passengers.

Yet another object of the present invention is to provide assistance to visually handicapped passengers by providing voice assistance.

Yet another object of the present invention is to provide assistance to auditory handicapped passengers by providing holographic hand-gestures and sign language.

Yet another object of the present invention is to provide technical and medical assistance to passengers in emergency situations to remediate the emergency situation.

Yet another object of the present invention is to provide counseling to passengers in emergency situations to ameliorate anxiety and panic of passengers.

Yet another object of the invention is to provide specialized technical assistance to a field technician performing a maintenance operation on the elevator.

These and other objects of the present invention are achieved in the preferred embodiments disclosed below by providing an AI based holographic elevator assistant to assist passengers in their commute within the elevators and in emergency situations.

### SUMMARY OF THE INVENTION

The following presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

According to a first aspect of the present invention there is provided a holographic elevator assistance system as claimed in claim 1. In some embodiments, the system includes a camera and the input is received via the camera. In some embodiments, the system includes a microphone and the input is received via the microphone. In some embodiments, the system includes a speaker and the CPIB outputs an audio via the speaker. In some embodiments, the projection from the holographic display includes an artificial intelligence avatar. In some embodiments, the system includes a two-dimensional (2D) display. In some embodiments, the system includes an elevator control panel.

The system includes an Artificial Intelligence (AI) server and the CPIB interprets the received input by sending it to the Artificial Intelligence (AI) server. The Artificial Intelligence (AI) server processes the received input and sends information to the CPIB to be projected from the holographic display. In some embodiments, the system includes a cloud database and the AI server checks for a corresponding action to the input in the cloud database and sends the actions to the CPIB. The action comprises holographic images to be projected from the holographic display. In some embodiments, the CPIB also performs the corresponding actions via the speaker. In some embodiments, the cloud database includes a column containing a flag for emergency which is used to identify an input as an emergency input.

In some other embodiments, the CPIB interprets the received input by checking for a corresponding action to the input in the local database and responds with a pre-recorded action in the local database, wherein the action comprises holographic images to be projected from the holographic display. In some embodiments, the CPIB also performs the corresponding actions via the speaker.

In some embodiments, the AI server identifies a corresponding emergency mitigation action available in the cloud database and sends the actions to CPIB. The CPIB performs the received actions. In some other embodiments, the CPIB identifies a corresponding emergency mitigation action available in the local database and performs the action.

In some embodiments, the emergency mitigation action includes connecting the user to a human assistance system. In some embodiments, if a corresponding emergency mitigation action is not available for an emergency input, the AI Server connects the user to a human assistance system.

In some embodiments, the human assistance system comprises a computer system having a camera, a speaker, a microphone, wherein the human assistance system can connect with the CPIB via the internet to establish a two-way communication between a user and a human assistance operator.

According to a second aspect of the present invention there is provided a method for providing a holographic assistance to an elevator user as claimed in claim 11. In some embodiments, the method includes processing the received input and sending audio output by the Artificial intelligence (AI) server to be played on the speaker by the CPIB. In some embodiments, the method includes interpreting the received input locally and responding with a pre-recorded output by the CPIB.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF ACCOMPANYING DRAWINGS

Some of the objects of the invention have been set forth above. These and other objects, features, aspects and advantages of the present invention will become better understood with regard to the following description, appended claims and accompanying drawings where:
Figures 1A - 1D illustrate a first embodiment of a holographic elevator assistance system, wherein Figures 1A shows the system connected to an artificial intelligence server, and Figure 1B shows the an artificial intelligence avatar displayed on a holographic display, Figure 1C shows the system connected to a human assistance operator, Figure 1D shows a combined system wherein the system can connect to a human assistance system or is connected to an AI server and the AI server can further connect the system to the human assistance system.
Figure 2 illustrates a second embodiment of a holographic elevator assistance system.
Figure 3 illustrates a third embodiment of a holographic elevator assistance system.
Figure 4 shows an exemplary method of working of the holographic elevator assistance system during regular operation.
Figure 5 shows an exemplary method of working of the holographic elevator assistance system during emergency operation.
Figure 6 show an alternative method of the working of the holographic assistance system with additional steps to be performed in case of an unavailability of an internet connection.
Figures 7-8 show an alternative method of the working of the holographic assistance system in a maintenance situation.

### DETAILED DESCRIPTION OF INVENTION

The following detailed description should be read with reference to the drawings in which similar elements in different drawings are numbered the same. The drawings, which are not necessarily to scale, depict illustrative embodiments and are not intended to limit the scope of the invention. Although examples of construction, dimensions, and materials are illustrated for the various elements, those skilled in the art will recognize that many of the examples provided have suitable alternatives that may be utilized.

### System Overview

The present invention discloses a holographic elevator assistance system that includes a plurality of input and output devices connected to a controller in the elevator cab to provide a holographic virtual assistant that can aid passengers in general, handicapped passengers, passengers in emergency situations, and field technicians. The holographic elevator assistance system can also connect the passengers of the elevator to a human assistance operator to provide further assistance. The system in a basic configuration includes a holographic display, an input device, and a Common Passenger Interface Board (CPIB). The input device can be a microphone and/or a camera. The input device receives an input from the user, for example, the microphone takes voice commands from the passenger and/or the camera senses the position, motion, emotional and health conditions of the passenger. The CPIB interprets the input received and performs an appropriate response (display graphic or textual information) on the holographic display. In some instances, other output devices can also be present in the system, such as a speaker and a two-dimensional (2D) display that can additionally present sound and 2D response to the user. The holographic display, the speaker, the microphone, and the camera also assist in establishing two-way communication between a passenger and a human assistance operator. The CPIB in some instances can also take assistance of an Artificial Intelligence server connected via the internet to generate appropriate response at the holographic display. The response on the holographic display can be in the form of a holographic virtual assistant. A range of actions can be performed by the holographic virtual assistant to respond to passenger inputs. For example, the virtual assistant can greet passengers inside the elevator cab, take voice based instructions from passengers, such as which floor they want to go, provide general information to the passengers, such as time, weather, help handicapped passengers by voice communication or hand gesture based sign language, give emergency assistance to the passengers, provide holographic images of emergency exit or first aid procedure during an emergency situation, or connect the passenger to a human assistance operator via the internet connection for further assistance. The system can further be used to provide specialized technical assistance to a field technician working on maintenance of the elevator. The holographic elevator assistance system is disclosed in detail in the sections below:

### Holographic Elevator Assistance System

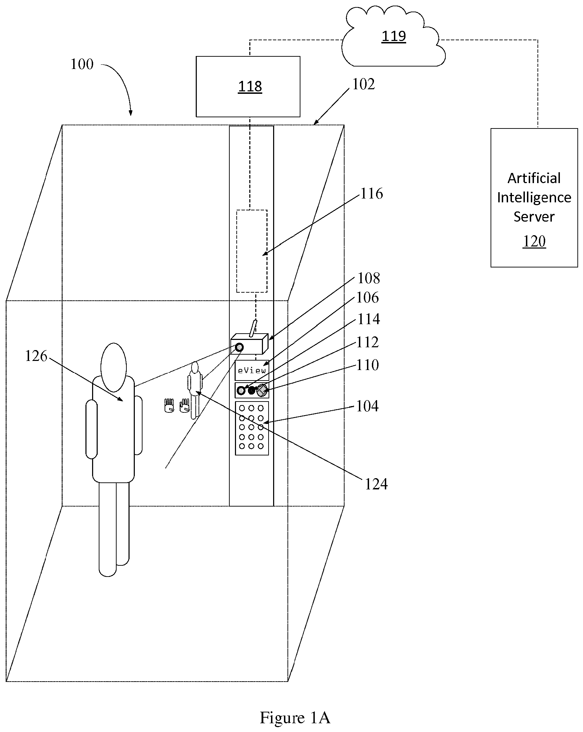

Figures 1A - 1D illustrate a first embodiment of a holographic elevator assistance system 100. In this embodiment, the system 100 is integrated in a wall of an elevator cab 102. The system 100 can be integrated in any wall panel of the elevator cab 102.

The system 100, as discussed in a basic configuration, includes a holographic display 108 for providing three-dimensional graphic or textual information to the passenger(s) of the elevator cab 102. The system 100 also includes a Common Passenger Interface Board (CPIB) 116 that interprets an input received from a passenger 126 and presents an appropriate response (graphical or textual information) on the holographic display 108.

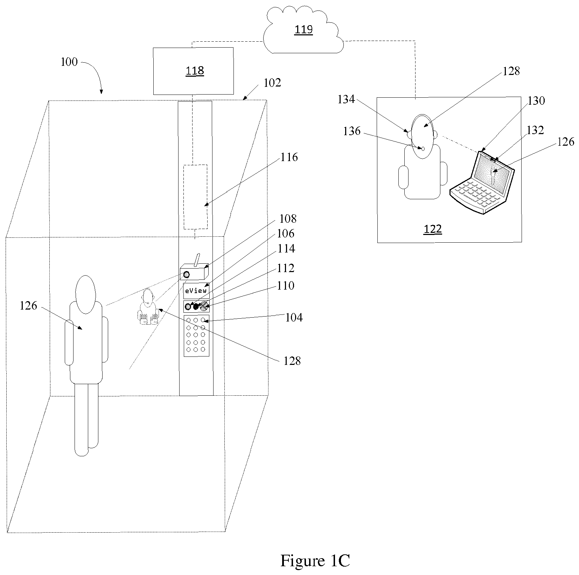

In various instances of the invention, the input can be received from the passenger 126 using an input device such as a microphone 112 that can capture voice commands and/or a camera 114 that can track the position, motion, emotional state or health condition of the passenger 126 of the elevator cab 102. The response can be presented on additional output devices such as a 2D (two-dimensional display) 106 that can display 2D information and a speaker 110 that can provide audio responses. The system 100 can further include an internet connection system (a gateway) 118 that can connect the CPIB 116 to the internet 119 which further can connect the CPIB 116 to an AI server 120 (See Figure 1A) or to a human assistance system 122 (See Figure 1C).

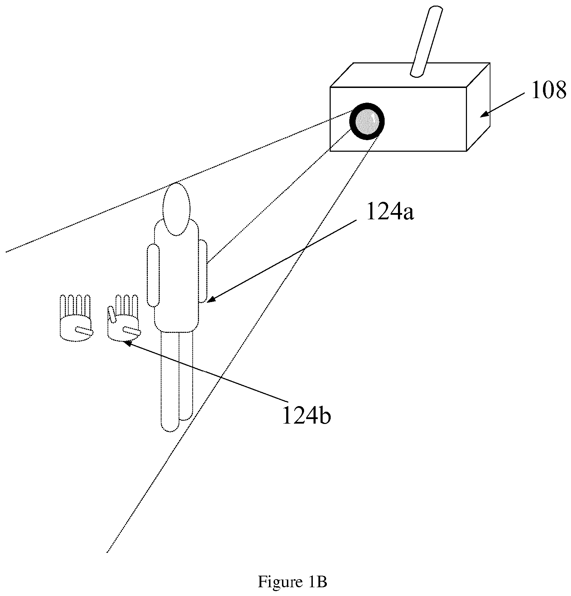

The AI Server 120 (See Figure 1A) can be a single server connected to the internet 119 or a cloud based system that can host a large database for interpreting various inputs received from the passenger. The AI Server 120 sends the responses to the interpreted inputs back to the CPIB 116. In some instances, the responses are performed on the holographic display 108 by a virtual assistance avatar 124 (see Figure 1B) discussed in detail below.

The human assistance system 122 (See Figure 1C) includes a human assistance operator (a human being) 128 sitting next to a computer 130, equipped with a camera 132, a headset and/or speaker 134, and a microphone 136 to communicate with the passenger 126 within the cab 102. In particular, the holographic display 108, camera 114, microphone 112, and speaker 110 within the cab 102 and the computer 130, camera 132, headset and/or speaker 134, and the microphone 136 within the system 122 can establish a two-way communication between the passenger 126 and the human assistance operator 128.

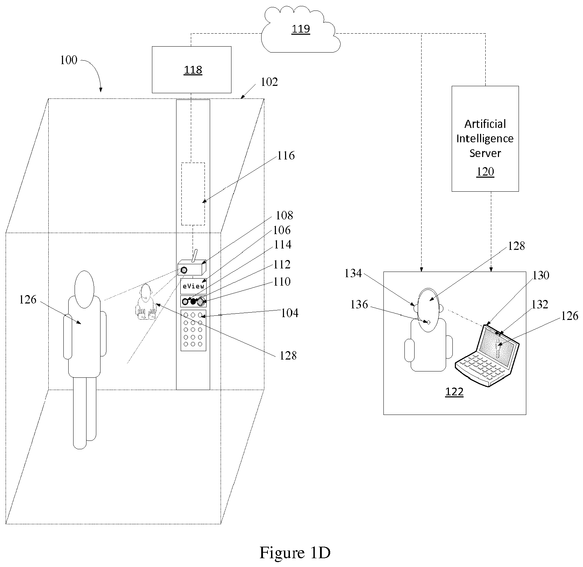

Further, in some instances, according to Figure 1D, the CPIB 116 can connect to the human assistance system 122 directly in case of immediate need or the CPIB 116 can first connect to the AI Server 120, which can assess the situation and then connect to human assistance system 122, if needed. The elevator cab 102 can furthermore include additional sensors (not shown) that can provide information to the CPIB 116 about the general state of the elevator cab 102 and/or any malfunctions in the elevator cab 102.

### System Elements

The elevator cab 102 can be any type of elevator cab known in the art. In some embodiments, the elevator cab 102 is modified to host the components discussed here in a wall, roof, or floor panel. Preferably, in some embodiments, the components are mounted in a single wall panel of the elevator cab 102 close to average adult human height for ease of installation, operation, and maintenance.

The system 100 can optionally include an elevator control panel 104 comprising buttons for conventional control of the elevator cab 102, which is well known in the art. In some embodiments, the elevator control panel 104 is included while in some other embodiments the elevator control panel 104 is not included.

The 2D display 106 can be any LED, LCD, OLED, or any other display panel known in the art. The 2D display 106 can be mounted adjacent to the control panel 104 or can be mounted to any other portion of the elevator cab 102 that is easily viewable by the passenger(s). In some embodiments, the 2D display 106 can be a touch screen display that can allow the system 100 to take touch input from the passenger 126. In such embodiments, the functions of the control panel 104 may be integrated in the display 106 and the control panel 104 may not be included in the system 100. However, some embodiments may not include the 2D display 106 and the holographic display 108 may perform the functions of the 2D display 106.

The holographic display 108 can be any type of available holographic display device, i.e. reflective displays, transmission displays, laser-plasma displays, Holovect^{™} displays, etc. In some embodiments, as shown in Figure 1A and 1B, the holographic display 108 is a projection system that can show a mid-air hologram within the elevator cab 102. One example, of such a system is Holo-Vect^{™}. In such embodiments, an ultrasonic touchable hologram, for example, such as one developed by Ultrahaptics^{™} can also be superimposed on the visual hologram to provide a sense of touch to the passengers trying to interact with the holographic images/ avatar 124 projected within the elevator cab 102.

The holographic display 108 provides three-dimensional information to the passenger. The three-dimensional information produced on the holographic display 108, for example, includes but is not limited to, a virtual assistant avatar 124, hand gestures for sign language, or a three dimensional image of a human assistance operator 128, location of the elevator in the building, spare parts and maintenance instructions, etc.

The speaker 110 and microphone 112 are well known devices in the art and any off-the-shelf devices that can be integrated in the elevator cab 102 to communicate with the passenger(s). In some embodiments, multiple speakers 110 and microphones 112 are placed at multiple locations in the elevator cab 102 to provide a three-dimensional sound effect to the passengers. Further, the output on the speaker 110 may include passenger location based auditory information if the passenger is visually challenged.

The camera 114 can be a regular, wide-angle, or fish-eye camera integrated in a wall panel of the elevator. In some embodiments, more than one camera 114 can be integrated in wall panels of the elevator cab 102 at various vantage points to track passengers within the cab 102. In some embodiments, camera 114 is configured to capture video that can be computationally processed to track the motion and position of a passenger within the elevator cab 102. The tracking of the position and motion of the passenger provides feedback to the system 100 while interacting with the passenger. For example, a virtual assistant avatar 124 in the holographic display 108 can be animated to interact with a passenger according to the position and movement of the passenger in the elevator cab 102.

In some further embodiments, the captured video/data can be computationally analyzed to determine the emotional state of the passengers. In yet some further embodiments, the captured video/data can be computationally analyzed to determine the health condition of the passenger. In some embodiments, the camera 114 may be accompanied by other tracking sensors, such as infrared, ultrasound, vibrational or electro-magnetic field sensors to identify various parameters that can provide feedback to the system 100 regarding the position, motion, emotional or health condition of the passenger. Some examples of such sensors include Microsoft's Kinect^{™} sensor or Leap Motion's Leap^{™} sensor.

The CPIB 116 is a customized microcontroller board that manages the control of various functionalities of the elevator cab 102 and the elevator assistance system 100. The CPIB 116 can be a microcontroller, a microcomputer, or a system on chip (SOC) device placed within a wall panel of the elevator cab 102. In some embodiments, the CPIB 116 is an off-the-shelf SOC from Qualcomm, Nvidia, Intel, AMD, Mediatech etc. In some embodiments, the CPIB 116 may include more than one chip for processing data, for example, the data received from the camera 114 may be pre-processed in a specialized chip before sending the data to a standard SOC.

In some embodiments, the CPIB 116 runs on a standard operating system such as a customized version of Linux, Android, Windows, or Mac OS. In some other embodiments, the CPIB 116 runs on a proprietary OS. The CPIB 116 is operationally connected to the 2D display 106, holographic display 108, speaker 110, microphone 112, and camera 114. The CPIB 116 can have local data storage like a memory chip or a hard drive, and can locally process the data received from the input devices, i.e. microphone 112, and camera 114 and/or transmit the data via the gateway 118.

The gateway 118 is an internet gateway known in the art. The gateway 118 can be centrally located in a building and connects all the elevator cabs 102 within the building to internet 119.

The AI server 120 (Figure 1A) can process data received from the CPIB 116 and interpret the passenger's need or emergency situation and transmit an appropriate response information to the CPIB 116. The CPIB 116 can then generate the appropriate response on the output devices, i.e. holographic display 108, 2D display 106, speaker 110. In some other embodiments, the artificial intelligence server 120 can include a proprietary AI system designed to apply deep learning techniques to process the received data and may learn from past inputs received from multiple elevator cabs 102. For example, the artificial intelligence server 120 can include a proprietary database that includes appropriate responses for each probable type and combination of inputs. The AI Server 120 can further update the database based on feedback received from the passengers of multiple elevator cabs 102. Alternatively, the AI Server 120 can host a customized version of known artificial intelligence systems such as Google Assistant^{™}, Apple Siri^{™}, Microsoft Cortana^{™}, Amazon Alexa^{™}, etc.

In some embodiments, the CPIB 116 can locally store some frequently used outputs (responses and actions) received from the AI Server 120 to save internet bandwidth and service passengers during slow internet connections or down-time.

### Virtual Assistant Avatar

In some embodiments, the output generated by the CPIB 116 is a virtual assistant avatar 124 (shown in Figures 1A, 1B), for example a virtual lift operator that can respond to the actions, commands, queries, and situation of the passengers. The virtual assistant avatar 124 can also be aided by audio output generated on the speaker 110 and 2D graphic and textual information displayed on the 2D display 106. The virtual assistance avatar 124 (See Figure 1B) can be any animated human-like, cartoon-like, or any other graphical character that can interact with the passengers of the elevator. In some instances, the virtual assistance avatar 124 can be a human-like animated character, for example, 124a, as shown in figure 1B. The benefit of having a human-like animated character 124a is to provide comfort to the passenger in emotional distress, shock, or fear situation. However, the animated character 124a can be a customized character, for example, in elevators installed in a hotel, the animated character 124a can be a specifically designed mascot for the hotel, in theme parks, the animated character 124a can be a cartoon character suitable to interact with children, etc. In some instances, the virtual assistance avatar 124 can also include a hand-gesture overlay 124b along with the animated character 124a, so that all interactions performed by the animated character 124a are also performed by the hand gestures overlay 124b. The overlay 124b can be very advantageous for deaf passengers traveling in the elevator. The virtual assistance avatar 124 can further appear in any other form that can be animated to interact with passengers in the elevator. For example, an animated geometric shape, as a line, circle, cube, sphere, etc. can also be used as the virtual assistance avatar 124. In some other instances, the virtual assistance avatar 124 can be represented by the trademark logo of the elevator manufacturer or operator.

In some embodiments, the CPIB 116 and/or the AI Server 120 can detect an emergency situation by passenger 126 pressing an emergency button, or by a call for help by the passenger 126, or by hand gestures of the passenger 126 or by monitoring the health condition of the passenger 126. If the emergency situation cannot be handled by the system 100 alone, the CPIB 116 and/or the AI Server 120 can hand over the controls of the elevator cab 102 to the human assistance system 122 (shown in Figures 1C, 1D). The human assistance system 122 includes a human operator 128 trained to handle emergency situations. The human operator 128 can control the elevator, diagnose problems in the elevator, guide the passenger 126 to perform a first aid procedure, guide the passenger 126 to an emergency exit, or help a field technician in maintenance jobs etc. In these embodiments, the camera 114, microphone 112, speaker 110, and holographic display 108 within the cab 102 and camera 132, headset 134, and microphone 136 within system 122 enables two-way communication between the operator 128 and the passenger 126.

### Alternative Embodiments

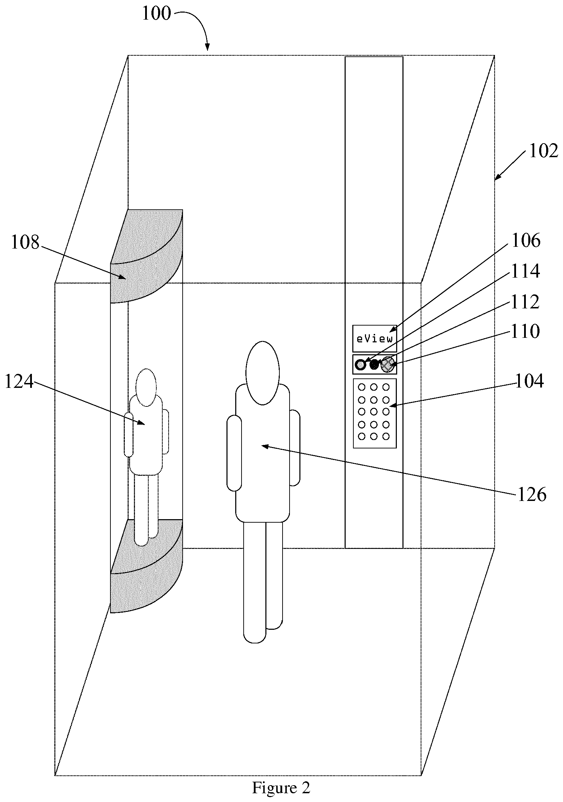

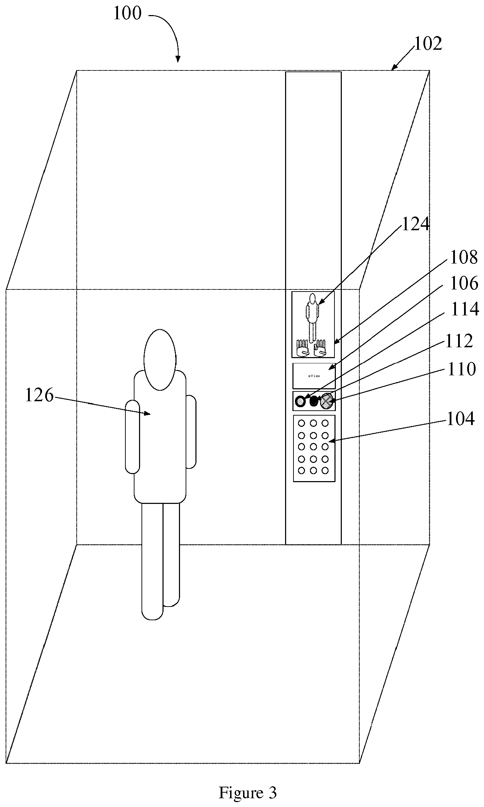

Figure 2 illustrates a second embodiment of the system 100, where the holographic display 108 is positioned at a corner of the elevator cab 102 and includes a life sized virtual avatar 124. In some embodiments, for example, as shown in Figure 3, the holographic display 108 is a simple reflective-type holographic display installed within a wall panel of the elevator cab 102.

### Method of operation

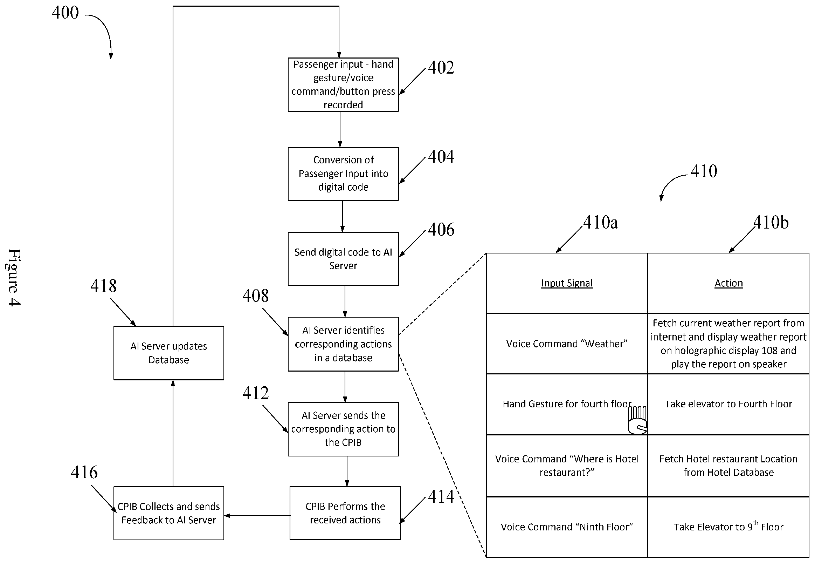

Figure 4 shows exemplary method 400 of working of the holographic elevator assistance system 100 during regular operation.

In step 402, input from the passenger 126 is received by the system 100. The input can be in the form of a button press on the control panel 104, press of a virtual button or icon on the touchscreen display 106, touching a holographic object on the holographic display 108, a voice command received by the microphone 112, or a hand-gesture performed in-front of the camera 114. In some instances, the input signal may be a sensor input which is not directly given by the passenger 126. For example, the elevator cab 102 may have sensors to determine whether the elevator is stuck or dysfunctional. In such instances, automated input signals may be generated to indicate the faulty state of the elevator.

In step 404, the received input is then processed in the CPIB 116. The received input is converted into a digital code. In some embodiments, a specific input can be attributed to a specific code on a database of pre-recorded inputs/instructions. For example, in a voice command received by the microphone 112 can be processed by a speech recognition algorithm and the words in the recognized speech can be attributed to specific codes, such as a phrase "first floor" could be attributed to a first digital code, a phrase "second floor" is attributed to a second digital code. Similarly, a video of a hand gesture performed in front of the camera 114 can be digitally image processed to interpret the meaning of the hand gesture, such as a specific sign language code. Further, a button or icon press on the control panel 104 or display 106 or holographic display 108 can be attributed to specific codes. The inputs received by the passenger 126 are thus converted into a string of digital instruction codes.

In step 406, CPIB 116 sends the string of instruction codes processed in step 404 to the AI Server 120. The AI server 120 is a cloud based system that can implement machine learning algorithm over instructions received over a period of time from more than one elevator and provides appropriate responses to the received instructions based on learning from past inputs.

In step 408, the AI Server 120 identifies appropriate response to the CPIB 116. In some embodiments, the AI Server 120 holds a database 410 that has corresponding actions, column 410b, linked to each instruction in the string of instructions, input signal column 410a. For example, for voice command "weather" in column 410a, the data base holds a corresponding, in column 410b, action of fetching current weather report from the internet and displaying the weather report on the holographic display 108 and playing the same information on the speaker 110. As another example, for an instruction of a hand-gesture for the number four, the action saved in the database can be to take the elevator to the fourth floor. The actions can also be further changed based on the past or future instructions received within the string of instructions in a defined period of time. For example, a hand gesture for 'four' followed by a hand gesture for 'three' may have a corresponding action of taking the elevator to 43^{rd} floor. As another example, a voice command "Where is the hotel restaurant?" followed by a voice command "What is on the menu?" can relate to an action of describing the location of the hotel restaurant and the menu of that restaurant. A person of ordinary skill in the art can further contemplate various actions for various groups of instructions received in the string of instructions.

In step 412, the AI Server 120 sends the corresponding actions to the CPIB 116. The actions are sent to the CPIB 116 as digital code that the CPIB 116 can interpret. In some instances, the actions can be sent to the CPIB 116 in a compressed format to save bandwidth or in regions of the world where the internet speed is not fast enough to transmit uncompressed data. A person of ordinary skill in the art can further contemplate various methods of transmitting data from the AI Server 120 to the CPIB 116.

In step 414, the CPIB 116 performs the received actions. The received actions can be any one or a combination of a pre-recorded voice response, taking the elevator to a specific floor, an animation on the holographic screen 108, an action performed by avatar 124 on the holographic screen 108, a visual, graphic, hand-gesture or text displayed on either the holographic screen 108 or the two-dimensional display 106. For example, the CPIB 116 animates the avatar 124 in a human-like form on the holographic display 108 and emits sound through the speaker 110 such that the avatar 124 looks like a human being narrating the weather information to the passenger 126. The CPIB 116 can further simultaneously display related information on the two-dimensional display 106. As another example, if the user requests for a menu of a hotel restaurant, the CPIB 116 can animate the avatar 124 to look like various menu items available in the hotel restaurant.

In step 416, the CPIB 116 collects and sends feedback to the AI Server 120. The feedback can be collected through the input devices microphone 112, camera 114, etc. The feedback can be collected by follow up questions, for example, a feedback on a voice command like "fifth floor" can be collected by a follow-up question, like "Would you like to take the elevator to fifth floor?." The response "Yes" or "No" can be captured by the microphone 112 and sent to the AI Server 120. As a second example, if the passenger 126 requests "Where is the hotel restaurant?" and the CPIB 116 provides an answer, say, "The hotel restaurant is on the seventh floor", the feedback can be taken by a follow-up question "Is this the information you are looking for?" The follow-up question can be simultaneously narrated by the speaker 110, animated on the virtual assistance avatar 124 on the holographic display 108, and presented in text format on the two dimensional display 106 or the holographic display 108, to assist passengers with disabilities, such as deaf or blind passengers. In some instances, the feedback is collected before performing the actions so as to prevent incorrect actions from being performed. A person of ordinary skill in the art can further contemplate various methods of collecting feedback.

In step 418, the AI Server 120, upon receipt of feedback, updates its database 410 to modify actions associated with various input instructions. For example, a feedback "No" on an action performed for a particular instruction can mean that the action corresponding to the instruction is not correct and needs to be changed. For example, in an exemplary scenario, a hand gesture for 'four' followed by 'three' may not mean taking the elevator to the 43^{rd} floor. It may mean that the passenger 126 changed his mind and wants to go to the 3^{rd} floor instead of 4^{th} floor. In this scenario, the feedback collected by the follow-up question "Do you want to take the elevator to the 43^{rd} floor?" may fetch an answer "No", which can be interpreted to drop the action of taking the elevator to 43^{rd} floor and taking the correct passenger 126 input again, i.e. moving to step 402 again. The method 400 can be repeated iteratively by the system 100 to perform correct actions. A person of ordinary skill in the art can further contemplate various methods of updating the database based on collected feedback.

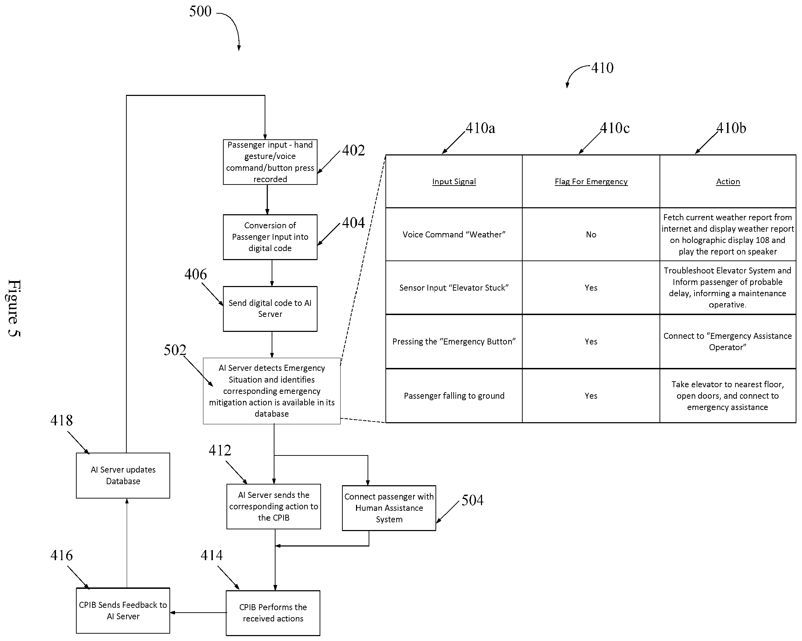

Figure 5 shows an exemplary method of working of the holographic elevator assistance system 100 during emergency operation. The method 500 is similar to the method 400 and includes additional steps 502 and 504. The method 500 further includes addition of a column 410c in the databases 410. As discussed in method 400, the CPIB 116 collects passenger 126 input in step 402, which is converted to digital code in step 404, and sent to the AI Server 120, in step 406. Instead of step 408, in method 500, the AI server 120 performs step 502. In step 502, in addition to identifying corresponding actions, column 410b, to the received instructions, column 410a, in database 410, the AI Server 120 also checks for a flag for emergency, column 410c, corresponding to each instruction, column 410a. The flag for emergency is an indicator for the received instruction to be categorized as an instruction corresponding to an emergency situation or not. The AI Server 120 can then look for the corresponding emergency mitigation action available in column 410b and perform such action. For example, pressing of an emergency button is flagged as an emergency and the corresponding action includes connecting the passenger 126 to the human assistance system 122. Other inputs by the passenger 126 can also be flagged as emergency input, for example, if the passenger 126 calls for "help" or other similar keywords. Another example of an emergency input will be if the passenger 126 makes hand gestures for calling for help. As another example, if the camera 114 detects the passenger 126 falling down to the ground. This incident can be flagged as an emergency instruction and a corresponding set of actions, for example, stopping the elevator to nearest floor, opening the elevator door, and connecting to the emergency assistance can be performed. Yet another example may include receipt of sensor input indicating that the elevator cab 102 is stuck or dysfunctional, such incidents can also be flagged as an emergency situation and the corresponding actions may include troubleshooting the elevator system, informing the passenger 126 of probable delay, and informing a maintenance operative.

As discussed earlier, the selected actions can be sent to the CPIB 116 in step 412. However, if the emergency flag is "Yes" and there is no corresponding action in the database 410 for the received input, the AI Server 120 connects the passenger 126 automatically to the Human Assistance System 122 in step 504. The steps 412 and step 504 can also be performed in parallel if the corresponding action in the database 410 includes connecting with the human assistance system 122, for example, for an input, pressing of an emergency button, the flag for emergency is "yes", and the corresponding action includes connecting with the human assistance system 122. A trained human operator 128 through the system 122 can perform a two-way communication with the passenger 126 and help the passenger 126 in mitigating the emergency situation. In some embodiments, the human operator 128 using system 122 can remotely perform diagnostic tests; control and trouble shoot the elevator system.

Then, the steps 414, 416, and 418 are performed as discussed above with reference to method 400. For example, in an emergency situation, if the passenger 126 is having a panic attack in a stuck elevator and calls for help, the AI Server in step 412, sends appropriate instructions to the CPIB 116, which in step 414 animates the avatar 124 on the holographic display 108 to a human-like form and emits sound on the speaker 110 such that the avatar 124 consoles the passenger 126 and tries to calm the passenger 126 down. The avatar 124 also seeks feedback (steps 416, 418) from the passenger 126 if the passenger 126 is feeling ok or not. If the passenger 126 still does not recover from the panic attack, the AI Server 120 and/or CPIB 116 connects the passenger 126 to the human assistance system 122.

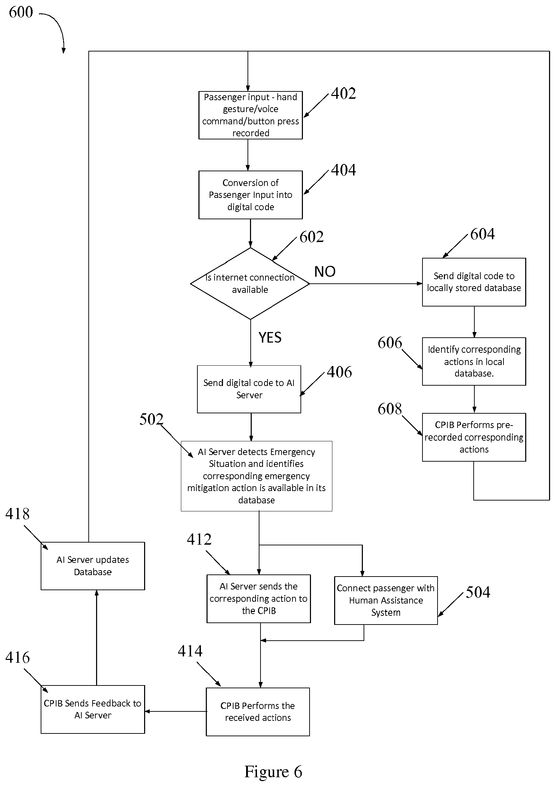

Figure 6 show an alternative method of the working of the holographic assistance system 100 with additional steps to be performed in case of an unavailability of an internet connection. The method 600 is similar to methods 400 and 500 as shown in Figures 4 and 5. The method 600 includes additional steps of 602, 604, 606, and 608. In many regions of the world, internet connection is not reliable and there may be instances where the internet connection is temporarily unavailable to the CPIB 116 to connect with the AI Server 120 and/or the human assistance system 122. In such instances, method 600 may be performed. In method 600, after step 404, a step 602 of checking the availability of internet connection is performed. If the internet connection is available, then the method proceeds to step 502 and proceeds further as described with Figures 4 and 5. However, if the internet connection is not available, in step 604, the CPIB 116 sends the digital code to a locally stored database, similar to database 410. The CPIB 116 then identifies pre-recorded corresponding actions to the input signals in the digital code in step 606, and performs the pre-recorded corresponding actions in step 608. After performance of the actions in steps 608, the method returns to step 402 to take passenger 126 input again. In some embodiments, the local storage of CPIB 116 may not be as large or complex as the AI Server 120 and may hold less data as compared to the AI Server 120. In some instances, the pre-recorded actions in the local storage may be based on frequency of instructions received by the system 100 and corresponding actions performed. For example, the local storage may hold pre-recorded actions that are most frequently performed by the system 100. The local database may also include a column for flagging emergency inputs similar to database 410.

Although methods, 500 - 600 of figures 5-6 describe incremental additions to method 400, it can be clearly appreciated that a person of skill in the art can form various other alternative methods by adding or removing these or other additional steps to method 400.

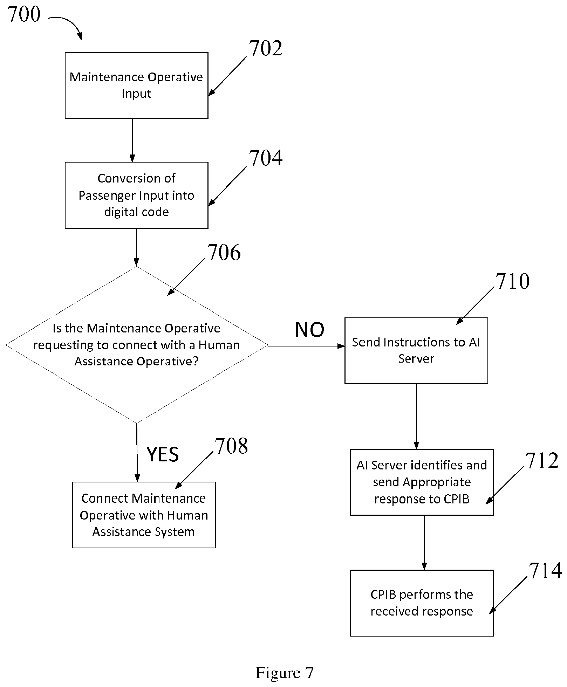

Figures 7-8 show a second set of exemplary methods of operation of the system 100 in a maintenance situation.

Figure 7 shows another exemplary method 700 of the working of the holographic assistance system 100 in a maintenance situation. The system 100 can also assist a maintenance operative (a technician working on a maintenance job of the elevator). In step 702, input from the maintenance operative is received by the system 100. The input can be in the form of a button press on the control panel 104, press of a virtual button or icon on the touchscreen display 106, touching a holographic object on the holographic display 108, a voice command received by the microphone 112, or a hand-gesture performed in-front of the camera 114.

The received input is then processed, in step 704, in the CPIB 116. The received input is converted into a digital code. In some embodiments, a specific input can be attributed to a specific code on a database of pre-recorded inputs/instructions. For example, in a voice command received by the microphone 112 can be processed by a speech recognition algorithm and the words in the recognized speech can be attributed to specific codes, such as a phrase "diagnose" could be attributed to a first digital code, a phrase "troubleshoot" is attributed to a second digital code. Similarly, a video of a hand gesture performed in front of the camera 114 can be digitally image processed to interpret the meaning of the hand gesture, such as a specific sign language code. Further, a button or icon press on the control panel 104 or display 106 or holographic display 108 can be attributed to specific codes. The inputs received by the maintenance operative are thus converted into a string of digital instruction codes.

The CPIB 116, in step 706, checks the received instructions, if the maintenance operative is requesting to connect with a human assistance operator 128; such a request could be press of a button on control panel 104, press of an icon on two-dimensional display 106, call for assistance, a hand gesture etc. If the maintenance operative is requesting to connect with a human assistance operator 128, then the CPIB 116, in step 708, connects the maintenance operative with the human assistance system 122. The human operator 128 can assist the maintenance operative in solving problems that he is not able to resolve on his own.

If the maintenance operative is not requesting to connect with the human assistance operator 128, the CPIB 116, in step 710 forwards the instructions to the AI Server 120. The instruction could for example, request for information of a specific part, such as a fuse or circuit board. The AI Server 120 identifies and sends appropriate response in step 712 to the CPIB 116. The appropriate response in the preceding example can be part number, or information about that specific fuse or circuit board. In Step 714, the CPIB 116 performs the received response. For example, the CPIB 116 narrates the fuse or circuit information through the speaker 110 and displays the information on the two-dimensional display 106 or the holographic display 108.

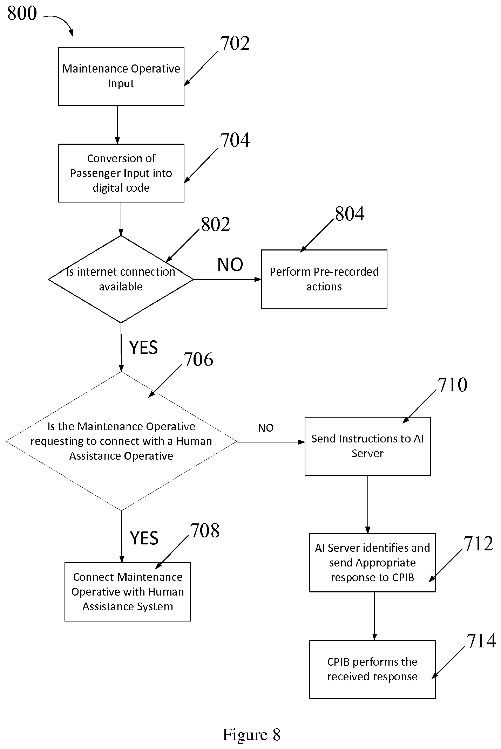

Figure 8 shows a second exemplary method 800 of working of the holographic elevator assistance system 100. The method 800 is similar to method 700 as shown in Figure 7 and includes two additional steps 802 and 804. In some instances, the connection of the elevator to the internet may be severed. The method 800 takes such instances into account. In method 800, after performing step 704, CPIB 116, in step 802, checks if internet connection is available or not. If the internet connection is not available, CPIB 116, in step 804, searches in its local memory or storage for appropriate responses to the string of digital instruction codes processed in step 704 and performs appropriate pre-recorded actions. The actions can be any one or a combination of a pre-recorded voice response, trouble shooting a specific part, an animation on the holographic screen, like a holographic image of a replacement part on the holographic screen 108, a visual, graphic, hand-gesture or text from an instruction manual displayed on either the holographic screen 108 or the two dimensional display 106. If internet connection is available the method proceeds to step 706.

Although methods, 700 and 800 of figures 7-8 are described as exemplary methods, it can be clearly appreciated that a person of skill in the art can form various other alternative methods by adding or removing these or other additional steps to methods 700 or 800.

### Use cases

The following sections provide some exemplary use cases for the system 100

### Regular Passenger

In an exemplary use case of the system 100, when a regular passenger 126 (with no handicap) boards the elevator cab 102, the virtual assistant avatar 124 greets the passenger 126 with both voice through the speaker 110 and hand gestures on the holographic display 108 and asks for the floor on which the passenger 126 wants to go. The passenger 126 can give voice commands or sign language commands to the virtual assistant avatar 124, or simply use the control panel 104. The CPIB 116 can perform corresponding actions to the received instruction. The avatar 124 can also take feedback from the passenger 126, if the system 100 is performing the correct action or not. During a long elevator trip, for example, in a high rise tower, the virtual assistant avatar 124 can entertain the passenger 126 or provide useful information to the passenger 126. In an emergency situation, such as, a deteriorating health condition of passenger 126, or a call for help from the passenger 126, or an abrupt stopping of the elevator, the virtual assistant avatar 124 can perform necessary emergency mitigation actions such as provide useful information, such as first aid information to the passenger 126 or connect the passenger 126 to the human operator 128, if needed. The virtual assistant avatar 124 or the human operator 128 based on the emergency situation can determine the necessary remedial solution, provide counseling to passenger 126 in emergency situations to ameliorate anxiety and panic of passenger 126, and control the elevator cab 102 to execute the remedial solution or at least direct the passenger 126 to take the necessary action.

### Blind Passenger

In an exemplary use case of the system 100, when a bind passenger 126 boards the elevator cab 102, the virtual assistant avatar 124 greets the passenger 126 with both voice through the speaker 110 and hand gestures on the holographic display 108 and asks for the floor on which the passenger 126 wants to go. The blind passenger 126 can give instructions through voice, which are picked up by the microphone 112. During a long elevator trip, for example, in a high rise tower, the virtual assistant avatar 124 can entertain the passenger 126 or provide useful information to the passenger 126 through the speaker 110. In an emergency situation, such as, a deteriorating health condition of passenger 126, or a call for help from the passenger 126, or an abrupt stopping of the elevator, the virtual assistant avatar 124 can provide useful information, such as first aid information to the passenger 126 or connect the passenger 126 to the human operator 128, if needed. The virtual assistant avatar 124 or the human operator 128 can determine the necessary remedial solution, provide counseling to passenger 126 in emergency situations to ameliorate anxiety and panic of passenger 126, and control the elevator cab 102 to execute the remedial solution or at least direct the passenger 126 to take the necessary action.

### Deaf and/or Mute Passenger

In an exemplary use case of the system 100, when a deaf and/or mute passenger 126 boards the elevator cab 102, the virtual assistant avatar 124 greets the passenger 126 with both voice through the speaker 110 and hand gestures on the holographic display 108 and asks for the floor on which the passenger 126 wants to go. The passenger 126 can give instructions through hand-gestures, which are picked-up by the camera 114. During a long elevator trip, for example, in a high rise tower, the virtual assistant avatar 124 can entertain the passenger 126 or provide useful information to the passenger 126 through the holographic display 108 and two-dimensional display 106 using hand-gestures, and other visual information. In an emergency situation, such as, a deteriorating health condition of passenger 126, or a gestural signaling for help from the passenger 126, or an abrupt stopping of the elevator, the virtual assistant avatar 124 can provide useful information, such as first aid information to the passenger 126 or connect the passenger 126 to the human operator 128 as soon as possible (based on availability of internet connection). The human operator 128 trained in sign language can determine the necessary remedial solution, provide counseling to passenger 126 in emergency situations to ameliorate anxiety and panic of passenger 126, and control the elevator cab 102 to execute the remedial solution or at least direct the passenger 126 to take the necessary action.

### Passenger with upper or lower extremity handicap

Similar to the examples provided above, the system 100 can assist passenger 126 with upper and lower extremity handicap by using voice based input of commands from the passenger 126. In some embodiments, the system 100 can detect the presence of a wheel-chair or crutches and can open the door of the elevator for longer period of time to assist the passenger 126 in easily entering and exiting the elevator. In some other embodiments, a button may be present on the floor panel of the elevator that could pre-intimate the system 100 that passenger 126 with upper and/or lower extremity handicap is entering the elevator.

### Maintenance Operative

As discussed above, with the help of Figures 7-8, the system 100 can help a maintenance operative in performing scheduled maintenance or repair of the elevator system by connecting the maintenance operative to the remotely available human assistance operator 128, who could be a well-trained engineer to trouble shoot the problem. Alternatively, the system 100 can provide necessary part information, instruction manual, etc. to the maintenance operative to help him in the maintenance or repair job.

### ADVANTAGES

A basic advantage of the present invention is that it provides a holographic assistant in an elevator.

Another advantage of the present invention is that it provides general assistance to elevator passengers.

Yet another advantage of the present invention is that it provides assistance to visually handicapped passengers by providing voice assistance.

Yet another advantage of the present invention is that it provides assistance to auditory handicapped passengers by providing holographic hand-gestures and sign language.

Yet another advantage of the present invention is that it provides technical and medical assistance to passengers in emergency situations to remediate the emergency situation.

Yet another advantage of the present invention is that it provides counseling to passengers in emergency situations to ameliorate anxiety and panic of passengers.

Yet another advantage of the invention is that it provides specialized technical assistance to a field technician performing a maintenance operation on the elevator.

## Claims

1. A holographic elevator assistance system (100) mountable in an elevator cab (102) comprising:
a holographic display (108); and
a Common Passenger Interface Board (CPIB) (116) wherein the CPIB (116) comprises a local database;
wherein, the CPIB (116) is configured to:
receive an input;
interpret the received input, and
perform a projection of a holographic image from the holographic display (108) based on the input; and
the system comprises an Artificial Intelligence (AI) server (120), and wherein the CPIB (116) interprets the received input by sending it to the Artificial Intelligence (AI) server (120), wherein the Artificial Intelligence (AI) server (120) processes the received input and sends information to the CPIB (116) to be projected from the holographic display (108); and
**characterised in that** the local database includes a column containing a flag for emergency which is used to identify an input as an emergency input, and wherein if the emergency input is present, the CPIB (116) first checks if active internet connection is available, wherein if active internet connection is not available, the CPIB (116) locally performs pre-recorded actions based on the inputs, and wherein if active internet connection is available then the CPIB (116) sends input to the AI server (120).

2. The holographic elevator assistance system (100) according to claim 1, wherein:
the system comprises a camera (114), and optionally the input is received via the camera (114); and/or
the system comprises a microphone (112), and optionally the input is received via the microphone (112); and/or
the system comprises a speaker (110), and optionally the CPIB (116) outputs an audio via the speaker (110).

3. The holographic elevator assistance system (100) according to claim 1 or 2, wherein the projection comprises an artificial intelligence avatar (124) from the holographic display (108).

4. The holographic elevator assistance system (100) according to any preceding claim, wherein the system comprises a cloud database, and optionally wherein the AI server (120) checks for a corresponding action to the input in the cloud database (410) and sends the actions to the CPIB (116), wherein the action comprises holographic images to be projected from the holographic display (108), and further optionally the CPIB (116) performs the corresponding actions via a speaker (110).

5. The holographic elevator assistance system (100) according to any preceding claim, wherein the CPIB (116) interprets the received input by checking for a corresponding action to the input in the local database and responds with a pre-recorded action in the local database, wherein the action comprises holographic images to be projected from the holographic display (108), and optionally the CPIB (116) performs the corresponding actions via a speaker (110).

6. The holographic elevator assistance system (100) according claim 4, wherein the cloud database (410) comprises a column (410c) containing a flag for emergency which is used to identify an input as an emergency input, and optionally wherein if the emergency input is present, the CPIB (116) first checks if active internet connection is available, wherein if active internet connection is not available, the CPIB (116) locally performs pre-recorded actions based on the inputs, and wherein if active internet connection is available then the CPIB (116) sends input to the AI server (120).

7. The holographic elevator assistance system (100) according to claim 4 or 6, wherein the AI server (120) identifies a corresponding emergency mitigation action available in the cloud database (410) and sends the actions to CPIB (116), and optionally wherein the CPIB (116) performs the received actions.

8. The holographic elevator assistance system (100) as claimed in any preceding claim, wherein the CPIB (116) identifies a corresponding emergency mitigation action available in the local database and performs the action.

9. The holographic elevator assistance system (100) according to claim 7, wherein:
i. the emergency mitigation action includes connecting the user (126) to a human assistance system (122); and/or
ii. if a corresponding emergency mitigation action is not available for an emergency input, the AI Server (120) connects the user to a human assistance system (122);
and optionally wherein the human assistance system (122) comprises a computer system (130) having a camera (132), a speaker (134), a microphone (136), wherein the human assistance system (122) can connect with the CPIB (116) via the internet to establish a two-way communication between a user (126) and a human assistance operator (128).

10. The holographic elevator assistance system (100) according to any preceding claim, wherein the system comprises a two-dimensional (2D) display (106) and/or wherein the system comprises an elevator control panel.

11. A method for providing a holographic assistance to an elevator user (126) with an elevator assistance system (100), the method comprising the steps of:
receiving an input from the user (126) interpreting the received input by a Common Passenger Interface Board (CPIB) (116) wherein the CPIB (116) interprets the received input by sending it to an Artificial Intelligence (AI) server (120), wherein the Artificial Intelligence (AI) server (120) processes the received input and sends information to the CPIB (116) to be projected from the holographic display (108); and
performing a projection of a holographic image from a holographic display (108) based on the input
wherein the CPIB (116) comprises a local database, **characterised in that** the local database includes a column containing a flag for emergency which is used to identify an input as an emergency input, the method comprising if the emergency input is present, the CPIB (116) first checking if active internet connection is available, if active internet connection is not available, the CPIB (116) locally performing pre-recorded actions based on the inputs, and if active internet connection is available, the CPIB (116) sending input to the AI server (120).

12. The method for providing a holographic assistance to an elevator user (126) according to claim 11, wherein the method comprises:
receiving a visual input via a camera (114); and/or
receiving an audio input via a microphone (112); and/or
providing an output via a speaker (110), and optionally wherein the method comprises sending audio output by the Artificial intelligence (AI) server (120) to be played on the speaker (110) by the CPIB (116).

13. The method for providing a holographic assistance to an elevator user (126) according to claim 11 or 12, wherein the method comprises interpreting the received input locally and responding with a pre-recorded output by the CPIB (116).

## Patentansprüche

1. Holografisches Aufzugassistenzsystem (100), das in einer Aufzugskabine (102) montierbar ist, Folgendes umfassend:
eine holografische Anzeige (108); und
ein Common Passenger Interface Board (CPIB) (116), wobei das CPIB (116) eine lokale Datenbank umfasst;
wobei das CPIB (116) für Folgendes konfiguriert ist:
Empfangen einer Eingabe;
Auslegen der empfangenen Eingabe und
Durchführen einer Projektion eines holografischen Bildes von der holografischen Anzeige (108) basierend auf der Eingabe; und
wobei das System einen Server für künstliche Intelligenz (KI) (120) umfasst, und wobei das CPIB (116) die empfangene Eingabe auslegt, indem es sie an den Server für künstliche Intelligenz (KI) (120) sendet, wobei der Server für künstliche Intelligenz (KI) (120) die empfangene Eingabe verarbeitet und Informationen an das CPIB (116) sendet, um von der holografischen Anzeige (108) projiziert zu werden; und
**dadurch gekennzeichnet, dass** die lokale Datenbank eine Spalte beinhaltet, die ein Notfall-Flag enthält, das verwendet wird, um eine Eingabe als Notfall-Eingabe zu identifizieren, und wobei, wenn die Notfall-Eingabe vorhanden ist, das CPIB (116) zuerst überprüft, ob eine aktive Internetverbindung verfügbar ist, wobei, wenn keine aktive Internetverbindung verfügbar ist, das CPIB (116) lokal voraufgezeichnete Aktionen basierend auf den Eingaben durchführt, und wobei, wenn eine aktive Internetverbindung verfügbar ist, das CPIB (116) die Eingabe dann an den KI-Server (120) sendet.

2. Holografisches Aufzugassistenzsystem (100) nach Anspruch 1, wobei:
das System eine Kamera (114) umfasst und optional der Eingang über die Kamera (114) empfangen wird; und/oder
das System ein Mikrofon (112) umfasst und optional der Eingang über das Mikrofon (112) empfangen wird; und/oder
das System einen Lautsprecher (110) umfasst und optional das CPIB (116) ein Audio über den Lautsprecher (110) ausgibt.

3. Holografisches Aufzugassistenzsystem (100) nach Anspruch 1 oder 2, wobei die Projektion einen künstliche Intelligenz-Avatar (124) von der holografischen Anzeige (108) umfasst.

4. Holografisches Aufzugsassistenzsystem (100) nach einem der vorhergehenden Ansprüche, wobei das System eine Cloud-Datenbank umfasst, und wobei optional der KI-Server (120) auf eine entsprechende Aktion zu der Eingabe in der Cloud-Datenbank (410) überprüft und die Aktionen an das CPIB (116) sendet, wobei die Aktion das Projizieren holographischer Bilder von der holographischen Anzeige (108) umfasst, und wobei ferner optional das CPIB (116) die entsprechenden Aktionen über einen Lautsprecher (110) durchführt.

5. Holografisches Aufzugsassistenzsystem (100) nach einem der vorhergehenden Ansprüche, wobei das CPIB (116) die empfangene Eingabe durch Überprüfen auf eine entsprechende Aktion zu der Eingabe in der lokalen Datenbank auslegt und mit einer voraufgezeichneten Aktion in der lokalen Datenbank antwortet, wobei die Aktion das Projizieren holographischer Bilder von der holographischen Anzeige (108) umfasst, und wobei optional das CPIB (116) die entsprechenden Aktionen über einen Lautsprecher (110) durchführt.

6. Holografisches Aufzugsassistenzsystem (100) nach Anspruch 4, wobei die Cloud-Datenbank (410) eine Spalte (410c) umfasst, die ein Notfall-Flag enthält, das verwendet wird, um eine Eingabe als Notfall-Eingabe zu identifizieren, und optional wobei, wenn die Notfall-Eingabe vorhanden ist, das CPIB (116) zuerst überprüft, ob eine aktive Internetverbindung verfügbar ist, wobei, wenn keine aktive Internetverbindung verfügbar ist, das CPIB (116) lokal voraufgezeichnete Aktionen basierend auf den Eingaben durchführt, und wobei, wenn eine aktive Internetverbindung verfügbar ist, das CPIB (116) die Eingabe dann an den KI-Server (120) sendet.

7. Holografisches Aufzugsassistenzsystem (100) nach Anspruch 4 oder 6, wobei der KI-Server (120) eine entsprechende Notfall-Minderungsaktion identifiziert, die in der Cloud-Datenbank (410) verfügbar ist, und die Aktionen an das CPIB (116) sendet, und wobei optional das CPIB (116) die empfangenen Aktionen durchführt.

8. Holografisches Aufzugsassistenzsystem (100) nach einem der vorhergehenden Ansprüche, wobei das CPIB (116) eine entsprechende Notfall-Minderungsaktion identifiziert, die in der lokalen Datenbank verfügbar ist, und die Aktion durchführt.

9. Holografisches Aufzugassistenzsystem (100) nach Anspruch 7, wobei:
i. die Notfall-Minderungsaktion das Verbinden des Benutzers (126) mit einem menschlichen Assistenzsystem (122) beinhaltet; und/oder
ii. falls für eine Notfalleingabe keine entsprechende Notfall-Milderungsaktion verfügbar ist, der KI-Server (120) den Benutzer mit einem menschlichen Assistenzsystem (122) verbindet;
und optional wobei das menschliche Assistenzsystem (122) ein Computersystem (130) mit einer Kamera (132), einem Lautsprecher (134), einem Mikrofon (136) umfasst, wobei das menschliche Assistenzsystem (122) über das Internet mit dem CPIB (116) verbunden werden kann, um eine Zwei-Wege-Kommunikation zwischen einem Benutzer (126) und einem menschlichen Assistenzoperator (128) aufzubauen.

10. Holografisches Aufzugassistenzsystem (100) nach einem der vorhergehenden Ansprüche, wobei das System eine zweidimensionale (2D) Anzeige (106) umfasst und/oder wobei das System ein Aufzugsteuerfeld umfasst.

11. Verfahren zum Bereitstellen einer holografischen Assistenz für einen Aufzugsbenutzer (126) mit einem Aufzugsassistenzsystem (100), wobei das Verfahren die folgenden Schritte umfasst:
Empfangen einer Eingabe von dem Benutzer (126)
Auslegen der empfangenen Eingabe durch ein Common Passenger Interface Board (CPIB) (116), wobei das CPIB (116) die empfangene Eingabe auslegt, indem es sie an den Server für künstliche Intelligenz (KI) (120) sendet, wobei der Server für künstliche Intelligenz (KI) (120) die empfangene Eingabe verarbeitet und Informationen an das CPIB (116) sendet, um von der holografischen Anzeige (108) projiziert zu werden; und
Durchführen einer Projektion eines holografischen Bildes von einer holografischen Anzeige (108) basierend auf der Eingabe, wobei das CPIB (116) eine lokale Datenbank umfasst, **dadurch gekennzeichnet, dass** die lokale Datenbank eine Spalte beinhaltet, welche ein Notfall-Flag enthält, das verwendet wird, um eine Eingabe als Notfall-Eingabe zu identifizieren, wobei das Verfahren umfasst, dass, wenn die Notfall-Eingabe vorhanden ist, das CPIB (116) zuerst überprüft, ob eine aktive Internetverbindung verfügbar ist, wobei, wenn keine aktive Internetverbindung verfügbar ist, das CPIB (116) lokal voraufgezeichnete Aktionen basierend auf den Eingaben durchführt, und wobei wenn eine aktive Internetverbindung verfügbar ist, das CPIB (116) die Eingabe an den KI-Server (120) sendet.

12. Verfahren zum Bereitstellen einer holografischen Assistenz für einen Aufzugsbenutzer (126) nach Anspruch 11, wobei das Verfahren Folgendes umfasst:
Empfangen einer visuellen Eingabe über eine Kamera (114); und/oder
Empfangen eines Audioeingangs über ein Mikrofon (112); und/oder Bereitstellen einer Ausgabe über einen Lautsprecher (110), und
optional wobei das Verfahren das Senden von Audioausgabe durch den Server für künstliche Intelligenz (KI) (120) umfasst, um auf dem Lautsprecher (110) durch das CPIB (116) abgespielt zu werden.

13. Verfahren zum Bereitstellen einer holografischen Assistenz für einen Aufzugsbenutzer (126) nach Anspruch 11 oder 12, wobei das Verfahren das lokale Auslegen der empfangenen Eingabe und das Antworten mit einer voraufgezeichneten Ausgabe durch das CPIB (116) umfasst.

## Revendications

1. Système d'assistance d'ascenseur holographique (100) pouvant être monté dans une cabine d'ascenseur (102) comprenant :
un affichage holographique (108) ; et
une Carte d'interface commune de passagers (CPIB) (116) dans lequel la CPIB (116) comprend une base de données locale ;
dans lequel, la CPIB (116) est configurée pour :
recevoir une entrée ;
interpréter l'entrée reçue, et
effectuer une projection d'une image holographique à partir de l'affichage holographique (108) en fonction de l'entrée ; et
le système comprend un serveur d'intelligence artificielle (IA) (120), et dans lequel la CPIB (116) interprète l'entrée reçue en l'envoyant au serveur d'intelligence artificielle (IA) (120), dans lequel le serveur d'intelligence artificielle (IA) (120) traite l'entrée reçue et envoie des informations à la CPIB (116) pour être projetées à partir de l'affichage holographique (108) ; et
**caractérisé en ce que** la base de données locale comporte une colonne contenant un indicateur d'urgence qui est utilisé pour identifier une entrée en tant qu'entrée d'urgence, et dans lequel si l'entrée d'urgence est présente, la CPIB (116) vérifie d'abord si une connexion internet active est disponible, dans lequel si une connexion internet active n'est pas disponible, la CPIB (116) effectue localement des actions préenregistrées en fonction des entrées, et dans lequel si une connexion internet active est disponible, la CPIB (116) envoie une entrée au serveur IA (120).

2. Système d'assistance d'ascenseur holographique (100) selon la revendication 1, dans lequel :
le système comprend une caméra (114), et éventuellement l'entrée est reçue par l'intermédiaire de la caméra (114) ; et/ou
le système comprend un microphone (112), et éventuellement l'entrée est reçue par l'intermédiaire du microphone (112) ; et/ou
le système comprend un haut-parleur (110), et éventuellement la CPIB (116) émet un son par l'intermédiaire du haut-parleur (110) .

3. Système d'assistance d'ascenseur holographique (100) selon la revendication 1 ou 2, dans lequel la projection comprend un avatar d'intelligence artificielle (124) à partir de l'affichage holographique (108).

4. Système d'assistance d'ascenseur holographique (100) selon l'une quelconque des revendications précédentes, dans lequel le système comprend une base de données en nuage, et éventuellement dans lequel le serveur IA (120) vérifie une action correspondante à l'entrée dans la base de données en nuage (410) et envoie les actions à la CPIB (116), dans lequel l'action comprend des images holographiques à projeter à partir de l'affichage holographique (108), et en outre éventuellement la CPIB (116) effectue les actions correspondantes par l'intermédiaire d'un haut-parleur (110).

5. Système d'assistance holographique d'ascenseur (100) selon une quelconque revendication précédente, dans lequel la CPIB (116) interprète l'entrée reçue en vérifiant une action correspondante à l'entrée dans la base de données locale et répond par une action préenregistrée dans la base de données locale, dans lequel l'action comprend des images holographiques à projeter à partir de l'affichage holographique (108), et éventuellement la CPIB (116) effectue les actions correspondantes par l'intermédiaire d'un haut-parleur (110).

6. Système d'assistance holographique d'ascenseur (100) selon la revendication 4, dans lequel la base de données en nuage (410), comprend une colonne (410c) contenant un indicateur d'urgence qui est utilisé pour identifier une entrée en tant qu'entrée d'urgence, et éventuellement dans lequel si l'entrée d'urgence est présente, la CPIB (116) vérifie d'abord si une connexion internet active est disponible, dans lequel si une connexion internet active n'est pas disponible, la CPIB (116) effectue localement des actions préenregistrées en fonction des entrées, et dans lequel si une connexion internet active est disponible, la CPIB (116) envoie alors une entrée au serveur IA (120) .

7. Système d'assistance d'ascenseur holographique (100) selon la revendication 4 ou 6, dans lequel le serveur IA (120) identifie une action d'atténuation d'urgence correspondante disponible dans la base de données en nuage (410) et envoie les actions à la CPIB (116), et éventuellement dans lequel la CPIB (116) effectue les actions reçues.

8. Système d'assistance d'ascenseur holographique (100) selon une quelconque revendication précédente, dans lequel la CPIB (116) identifie une action d'atténuation d'urgence correspondante disponible dans la base de données locale et effectue l'action.

9. Système d'assistance d'ascenseur holographique (100) selon la revendication 7, dans lequel :
i. l'action d'atténuation d'urgence comporte la connexion de l'utilisateur (126) à un système d'assistance humaine (122) ; et/ou
ii. si une action d'atténuation d'urgence correspondante n'est pas disponible pour une entrée d'urgence, le serveur IA (120) connecte l'utilisateur à un système d'assistance humaine (122) ; et éventuellement dans lequel le système d'assistance humaine (122) comprend un système informatique (130) ayant une caméra (132), un haut-parleur (134), un microphone (136), dans lequel le système d'assistance humaine (122) peut se connecter à la CPIB (116) par l'intermédiaire d'internet pour établir une communication bidirectionnelle entre un utilisateur (126) et un opérateur d'assistance humaine (128).

10. Système d'assistance d'ascenseur holographique (100) selon une quelconque revendication précédente, dans lequel le système comprend un afficheur bidimensionnel (2D) (106) et/ou dans lequel le système comprend un panneau de commande d'ascenseur.

11. Procédé pour fournir une assistance holographique à un utilisateur d'ascenseur (126) à l'aide d'un système d'assistance d'ascenseur (100), le procédé comprenant les étapes :
de réception d'une entrée provenant de l'utilisateur (126) d'interprétation de l'entrée reçue par une carte d'interface commune de passagers (CPIB) (116), dans lequel la Carte d'interface commune de passagers (CPIB) (116) interprète l'entrée reçue en l'envoyant à un serveur d'intelligence artificielle (IA) (120), dans lequel le serveur d'intelligence artificielle (IA) (120) traite l'entrée reçue et envoie des informations à la Carte d'interface commune de passagers (CPIB) (116) pour être projetées à partir de l'affichage holographique (108) ; et
de réalisation d'une projection d'une image holographique à partir de l'affichage holographique (108) en fonction de l'entrée ;
dans lequel la CPIB (116) comprend une base de données locale, **caractérisé en ce que** la base de données locale comporte une colonne contenant un indicateur d'urgence qui est utilisé pour identifier une entrée en tant qu'entrée d'urgence, le procédé comprenant, si l'entrée d'urgence est présente, le fait pour la CPIB (116) de vérifier d'abord si une connexion internet active est disponible, si aucune connexion internet active n'est disponible, le fait pour la CPIB (116) d'effectuer localement des actions préenregistrées en fonction des entrées, et si une connexion internet active est disponible, le fait pour la CPIB (116) d'envoyer une entrée au serveur IA (120).

12. Procédé pour fournir une assistance holographique à un utilisateur d'ascenseur (126) selon la revendication 11, dans lequel le procédé comprend :
la réception d'une entrée visuelle par l'intermédiaire d'une caméra (114) ; et/ou
la réception d'une entrée audio par l'intermédiaire d'un microphone (112) ; et/ou
la fourniture d'une sortie par l'intermédiaire d'un haut-parleur (110), et éventuellement, dans lequel le procédé comprend l'envoi d'une sortie audio par le serveur d'intelligence artificielle (IA) (120) pour être lue sur le haut-parleur (110) par la CPIB (116).

13. Procédé pour fournir une assistance holographique à un utilisateur d'ascenseur (126) selon l'une quelconque des revendications 11 à 12, dans lequel le procédé comprend l'interprétation de l'entrée reçue localement l'entrée reçue et le fait de répondre avec une sortie préenregistrée par la CPIB (116) .
